# EUROPÄISCHE PATENTSCHRIFT

(11) **EP 0 627 013 B1**
(45) Veröffentlichungstag und Bekanntmachung des Hinweises auf die Patenterteilung: **18.10.1995**
(21) Anmeldenummer: 93903945.9
(22) Anmeldetag: 10.02.1993
(51) Int. Cl.: C22B 3/32, C22B 30/00, C22B 30/04

(54) **VERFAHREN ZUR ABTRENNUNG VON STÖRELEMENTEN AUS WERTMETALL-LÖSUNGEN**
PROCESS FOR SEPARATING DISTURBING ELEMENTS FROM SOLUTIONS OF VALUABLE METALS
PROCEDE DE SEPARATION D'ELEMENTS PERTURBATEURS CONTENUS DANS DES SOLUTIONS DE METAUX D'INTERET

(30) Priorität: 19.02.1992 DE 4204994
(43) Veröffentlichungstag der Anmeldung: 07.12.1994
(73) Patentinhaber: Henkel Kommanditgesellschaft auf Aktien, 40191 Düsseldorf (DE)
(72) Erfinder: SCHWAB, Werner, D-4019 Monheim 2 (DE); KEHL, Ralf, D-4000 Düsseldorf 31 (DE)
(86) Internationale Anmeldenummer: EP9300322
(87) Internationale Veröffentlichungsnummer: WO9317134

(56) Entgegenhaltungen:
- EP-A- 0 283 740
- EP-A- 0 302 345
- EP-A- 0 370 233
- WO-A-90/13675
- US-A- 3 900 551
- US-A- 5 174 917

## Beschreibung

Die Erfindung betrifft ein Verfahren zur Abtrennung von den Störelementen Arsen und gegebenenfalls Antimon, Wismut oder Eisen aus Wertmetall-Lösungen durch Extraktion im Wege der Solvent-Extraktion und nachfolgende Trennung der Störelemente.

Im Rahmen der Erfindung werden unter dem Begriff "Wertmetalle" die Elemente Kupfer, Nickel, Zink, Kobalt, Chrom und Aluminium verstanden, die alle mit Arsen verunreinigt sein können. Wertmetall-Lösungen sind im Sinne der Erfindung wäßrige Systeme mit den aufgezählten Wertmetallen in ionogener Form, die außer Arsen gegebenenfalls Antimon, Wismut oder Eisen als Störelemente in Form ihrer Ionen in wechselnden Mengen enthalten. Die Störelemente sollen nun aus den Wertmetall-Lösungen abgetrennt werden, damit die Wertmetall-Lösungen anschließend entweder direkt weiterverwendet oder der elektrolytischen Gewinnung der Wertmetalle oder ihrer Salze zugeführt werden können.

Häufig werden Wertmetall-Lösungen aus Erzen durch Aufschluß oder Auslaugen mit wäßrigen Systemen erhalten. In jüngster Zeit spielt aber auch das Aufbereiten von Flugstäuben oder das Recycling von verbrauchten Wertmetallprodukten eine bedeutende Rolle bei der Bereitstellung von Wertmetall-Lösungen. Unabhängig davon, auf welche Art und Weise die Wertmetall-Lösungen entstanden sind, ist es stetiges Bemühen, die enthaltenen Störelemente Arsen und gegebenenfalls Antimon, Wismut oder Eisen von diesen abzutrennen, damit reine Wertmetalle erhalten werden. Abgesehen von der beabsichtigten Verbesserung der Qualität und Quantität der Wertmetalle wird auch eine Wiedergewinnung der Störelemente aufgrund ökonomischer und ökologischer Überlegungen angestrebt.

Aus dem Stand der Technik sind zahlreiche Solvent-Extraktions-Verfahren im Zusammenhang mit der Kupferraffinationselektrolyse bekannt, in denen Arsen in wenigen Fällen auch Antimon, aus Wertmetall-Lösungen abgetrennt werden. So wird in der deutschen Offenlegungsschrift DE-A-26 03 874 ein Verfahren zur Abtrennung von Arsen beschrieben, wobei man die wäßrige Elektrolytlösung mit einer Tributylphosphat enthaltenden organischen Phase in Kontakt bringt und dabei das Arsen in die organische Phase extrahiert. Aus der europäischen Offenlegungsschrift EP-A-106 118 ist bekannt, daß man Arsen mit phosphororganischen Verbindungen wie Trioctylphosphinoxid in organischen Lösungsmitteln wie Kerosin aus Kupferelektrolyt-Lösungen abtrennen kann. Zur Aufarbeitung des Arsens wird vorgeschlagen, wäßrige Salzsäure oder andere Mineralsäuren mit der organischen, Arsen enthaltenden Phase in Kontakt zu bringen. Auch aus der deutschen Offenlegungsschrift DE-A-34 23 713 ist ein Verfahren zum Entfernen von Arsen aus schwefelsauren Kupferelektrolyten offenbart, in dem als Extraktanden aliphatische Alkohole mit 6 bis 13 C-Atomen, bevorzugt 2-Ethyl-1-hexanol, in organischer Phase verwendet werden. Dabei läßt sich ein Großteil des Arsens im Verlauf von 6 Extraktionscyclen entfernen.

Alle genannten Verfahren weisen jedoch Nachteile auf: Die Verfahren benötigen eine extrem hohe Konzentration an Säure für eine effiziente Arsen-Extraktion, die praktisch dadurch erreicht wird, daß die Kupferelektrolytlösung durch Einengen auf eine Schwefelsäurekonzentration von ursprünglich 100 bis 250 g/l auf ca. 500 g/l angehoben wird. Bei derart hohen Schwefelsäurekonzentrationen werden mit der Störelementextraktion auch erhebliche Mengen an Schwefelsäure in die organische Phase überführt. Um diese zu entfernen, müssen mehrere Waschstufen eingebaut werden, was ein unerwünschter Mehraufwand ist. Zudem sind die phosphororganischen Extraktanden bei derart hohen Säurestärken nicht hinreichend stabil, was im Laufe der Extraktion zu Wirkungsverlusten des Extraktanden und zu unerwünschter "Crud"-Bildung führt.

Die am Beispiel der Abtrennung von Störelementen aus Kupferelektrolyt-Lösungen aufgezeigten Schwierigkeiten gelten entsprechend auch für Verunreinigungen durch die Störelemente in wäßrigen Lösungen der anderen, bereits aufgezählten Wertmetalle. Im Einzelfall kann die Abtrennung eines bestimmten Störelementes unter einer Gruppe derartiger Störelemente im Vordergrund stehen.

Die beschriebenen Nachteile der Störelementabtrennung werden von den deutschen Offenlegungsschriften DE-A-37 25 611 und DE-A-38 36 731 der Anmelderin überwunden. Nach diesen beiden Patentanmeldungen können die Störelemente Arsen, Antimon, Wismut und Eisen einzeln oder nebeneinander aus wäßrigen Elektrolytlösungen im Wege der Solventextraktion abgetrennt werden, indem man die wäßrigen, mineralsauren Elektrolytlösungen mit organischen Lösungen von Hydroxamsäuren versetzt, die Störelemente extrahiert und danach die Störelemente enthaltenden organische Phase aufarbeitet. Bei der deutschen Offenlegungsschrift DE-A-37 25 611 wurde die Aufarbeitung aus der organischen Phase durch Sulfidfällung der Störelemente Arsen, Antimon und Wismut durchgeführt. Das noch in der Organphase verbleibende Eisen wurde anschließend mit einem wasserlöslichen Komplexbildner für Eisen wie Salzsäure oder Oxalsäure, in eine wäßrige Phase gestrippt und zurückgewonnen. Bei dieser Aufarbeitung fallen die größten Mengen an Störelemente als Sulfidfilterkuchen an, der zum einen technisch aufwendig aufgearbeitet werden muß und zum anderen noch organische Lösungsmittel oder Hydroxamsäure enthalten kann. Zudem löst sich der zur Sulfidfällung eingesetzte Schwefelwasserstoff auch in dem organischen Lösungsmittel, so daß eine zusätzliche Reinigungsstufe zur Entfernung des Schwefelwasserstoffs notwendig ist, damit die organische Phase anschließend wieder eingesetzt werden kann. In der deutschen Offenlegungsschrift DE-A-38 36 731 wird die Aufarbeitung der Störelemente insofern modifiziert, als vor der Sulfidfällung die mit Störelementen beladene organische Phase mit Wasser versetzt wird, wobei Arsen und/oder Antimon in die Wasserphase gestrippt werden, so daß sich die Aufarbeitung des Sulfidfilterkuchens erleichtert. Dennoch treten auch hier die Nachteile der Sulfidfällung auf. Zudem entstehen nach dieser Verfahrensvariante nur niedrigkonzentrierte wäßrige Arsenlösungen, wobei die hohen Wassermengen die Aufarbeitung des Arsens kostspieliger und unrentabler macht.

Aufgabe der vorliegenden Erfindung ist es, ein Verfahren zur Abtrennung von den Störelementen Arsen und gegebenenfalls Antimon, Wismut oder Eisen aus Wertmetall-Lösungen bereitzustellen, das die vorher geschilderten Nachteile vermeidet und insgesamt eine technisch einfache, wirtschaftliche kontinuierliche Abtrennung und Aufbereitung der Störelemente ermöglicht. Des weiteren sollte nach diesem Verfahren zumindest das Störelement Arsen als hochkonzentrierte wäßrige Lösung anfallen.

Überraschenderweise wurde gefunden, daß ein selektives Stripping von Arsen aus der Organophase unter Zusatz einer Wertmetall-Lösung erreicht werden kann, wenn diese Wertmetall-Lösung einen höheren pH-Wert gegenüber der von den Störelementen zu befreienden Wertmetall-Lösung aufweist.

Gegenstand der vorliegenden Erfindung ist ein Verfahren zur Abtrennung der Störelemente Arsen und gegebenenfalls Antimon, Eisen oder Wismut aus Wertmetall-Lösungen im Wege der Solvent-Extraktion und Trennung der Störelemente untereinander, wobei man
a) die wäßrigen, stark mineralsauren Wertmetall-Lösungen mit organischen Lösungen von Hydroxamsäuren der allgemeinen Formel (I) versetzt 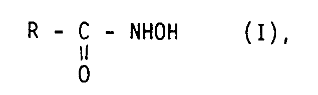 in der R für einen Alkyl- und/oder Alkenylrest mit 6 bis 22
   C-Atomen, Cycloalkylrest oder Arylrest mit bis zu 19
   C-Atomen steht,
b) die wäßrige und organische Phase über eine ausreichende Verweilzeit miteinander mischt und die Phasen trennt, dadurch gekennzeichnet, daß man danach
c) im Falle der Anwesenheit von Antimon, Eisen oder Wismut diese aus der organischen Phase mit wäßrigen, Antimon, Eisen oder Wismut komplexierenden Säuren strippt und gleichzeitig oder anschließend
d) Arsen aus der organischen Phase mit einer wäßrigen Wertmetall-Ionen enthaltenden Lösung bei einem gegenüber a) höheren pH-Wert im Bereich von 1,5 bis 5, strippt und
e) die wäßrigen, Störelemente enthaltenden Lösungen in an sich bekannter Weise aufarbeitet.

Das erfindungsgemäße Verfahren fällt unter den Oberbegriff der sogenannten "Solvent-Extraktion". Darunter werden üblicherweise solche Verfahren verstanden, in denen zwei flüssige Phasen, die wenig miteinander oder nicht ineinander löslich sind in innigen Kontakt gebracht werden und dabei ein Übergang einer oder mehrerer Komponenten der einen in die andere Phase stattfindet. Üblicherweise stellt sich dabei ein von verschiedenen äußeren Parametern abhängiges Gleichgewicht ein. Wichtige Parameter sind die Verweilzeit (Kontaktierungszeit), Temperatur und pH-Wert. Der Begriff "Stripping" ist analog der oben definierten "Solvent-Extraktion" ein Übergang einer oder mehrerer Komponenten von einer in die andere Phase, wobei aber der Phasenübergang genau umgekehrt zur vorgeschalteten Extraktion erfolgt. Sowohl bei der Extraktion als auch beim Stripping werden die beiden wenig bzw. nicht miteinander löslichen Phasen intensiv miteinander über eine bestimmte Verweilzeit vermischt. Danach läßt man die Phasen sich trennen und behandelt anschließend jede einzelne Phase weiter.

In den Lösungen der Störelemente und Wertmetalle liegen diese in ionischer Form vor, die in unterschiedlichen Oxidationsstufen in der Lösung vorkommen können. So kann beispielsweise das Störelement Arsen in der Oxidationsstufe (III) oder der Oxidationsstufe (V) in wäßrigen Lösungen vorliegen. Neben dem Arsen können Antimon, Eisen oder Wismut als zusätzliche Störelemente enthalten sein oder auch die verschiedensten Mischungen von Antimon, Eisen und Wismut.

Der erste Schritt a) und zweite Schritt b) des erfindungsgemäßen Verfahrens basiert auf den Verfahren gemäß den deutschen Offenlegungsschriften DE-A-37 25 611 und DE-A-38 36 731 der Anmelderin. Ganz analog zu diesen beiden Offenlegungsschriften werden die wäßrigen, stark mineralsauren Wertmetall-Lösungen mit den organischen Lösungen der Hydroxamsäuren der allgemeinen Formel (I) versetzt. Die organischen Lösungen der Hydroxamsäuren können eine oder mehrere verschiedene Hydroxamsäuren der allgemeinen Formel (I) enthalten. Der Rest R in der allgemeinen Formel (I) steht bevorzugt für geradkettige Alkylreste aus der Gruppe Hexyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl, Eicosyl, Uneicosyl oder Docosyl. Es ist jedoch auch möglich, daß R für verzweigtkettige Isomere der genannten geradkettigen Alkylreste steht. Bevorzugt steht R für verzweigte, gesättigte Alkylreste mit 6 bis 22 C-Atomen, vorzugsweise mit 7 bis 19 C-Atomen. Ganz besonders bevorzugt werden Hydroxamsäuren der allgemeinen Formel (I), in der R für Neo-Alkylreste der allgemeinen Formel (II) 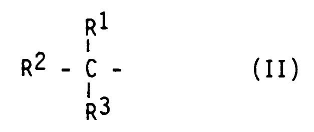
steht, in der die Summe der C-Atome der Reste R¹, R² und R³ im Bereich von 6 bis 18, vorzugsweise 7 bis 17 C-Atomen, liegt. Die Einzelbedeutung der Reste R¹ bis R³ ist in diesem Zusammenhang von untergeordneter Bedeutung. Solche Hydroxamsäuren basieren auf Neo-Alkylcarbonsäuren, die beispielsweise unter dem Handelsnamen Versatic-Säure^{R} vertrieben werden.

Prinzipiell können die Hydroxamsäuren der allgemeinen Formel (I) nach an sich bekannten Verfahren hergestellt werden. So beschreibt beispielsweise die deutsche Patentschrift DE-C-22 10 106 die Umsetzung von Carbonsäuren mit einem Überschuß an SOCl₂ in das entsprechende Säurechlorid und Überführung mit Hydroxylaminen zur Hydroxamsäure der allgemeinen Formel (I). Dabei gibt RCO den Rest der entsprechenden Carbonsäure wieder.

Im Sinne der Erfindung werden organische Lösungen der Hydroxamsäuren eingesetzt. Als organische Lösungsmittel kommen beispielsweise aliphatische, cycloaliphatische oder aromatische Kohlenwasserstoffe oder deren Mischungen mit hohem Siedepunkt, fluorierte Kohlenwasserstoffe, Ketone oder Ether mit hohem Siedepunkt oder auch Mischungen derartiger Verbindungen in Frage. Bevorzugt werden Kerosine eingesetzt.

Einer Ausführungsform der vorliegenden Erfindung entsprechend, die von den bereits mehrfach zitierten deutschen Offenlegungsschriften DE-A-37 25 611 und DE-A-38 36 731 abweicht, sind in der organischen Lösung der Hydroxamsäuren zusätzlich aus dem Stand der Technik bekannte Modifier enthalten. Als "Modifier" werden zumeist solche Verbindungen bezeichnet, die entweder eine bessere oder schnellere Phasentrennung bewirken oder den Phasenübergang der zu extrahierenden und strippenden Komponente beschleunigen. Häufig handelt es sich dabei um dieselben Produkte (vergl. Handbook of Solvent Extraction, Hrsg. Wiley & Son, New York 1983, Seite 84 und 640). Im Sinne der Erfindung sollen Modifier den Phasenübergang der Störelemente, vorzugsweise beim Stripping, beschleunigen. Eine Reihe von für diesen Zweck geeigneten Verbindungen werden in dem zitierten Handbook und in der europäischen Patentschrift EP-C- 202 833 beschrieben. Bevorzugt werden als Modifier verzweigte aliphatische Alkohole, Phenole und/oder Ester hiervon, vorzugsweise langkettige verzweigte Alkohole mit 12 bis 22 C-Atomen und/oder deren Ester und insbesondere davon die Alkohole.

Bei den Wertmetall-Lösungen kann es sich um solche handeln, die durch Aufschluß aus Erzen gewonnen werden, oder durch Aufbereiten von Flugstäuben oder beim Recyclen von verbrauchten Wertmetallprodukten, sofern sie Arsen als Störelement enthalten. Besonders geeignet ist das erfindungsgemäße Verfahren für saure Wertmetall-Elektrolytlösungen aus denen durch Elektrolyse die Wertmetalle in metallischer Form gewonnen werden. Insbesondere geeignet ist das Verfahren für Kupferelektrolytlösungen, vorzugsweise von wäßrigen, schwefelsauren Kupfer-Raffinationselektrolytlösungen. Derartige Kupfer-Raffinationselektrolytlösungen schwanken in ihrer Zusamensetzung an Störelementen je nach Qualität der Kupferrohanoden. In der Regel sind jedoch nur geringe Mengen an Antimon, Wismut und Eisen im Bereich von 0,05 bis 0,6 g/l enthalten. Die Arsenmengen liegen deutlich höher im Bereich von cirka 5 bis oberhalb von 20 g/l. Zusätzlich sind in den Raffinationselektrolytlösungen etwa 100 bis 250 g/l freie Säuren, vorzugsweise Schwefelsäure, enthalten. Die anderen im Sinne der Erfindung ebenfalls einsetzbaren Wertmetall-Lösungen zeigen qualitativ und quantitativ andere Zusammensetzungen, wie prinzipiell aus dem Stand der Technik bekannt, beispielsweise aus dem Handbook of Solvent Extraction, Hrsg. Wiley & Son, New York 1983, Seite 734.

Der pH-Wert dieser Lösungen liegt in der Regel unter Null.

Der zweite Schritt b) des erfindungsgemäßen Verfahrens ist ebenfalls ganz analog zu den beiden zitierten deutschen Offenlegungsschriften der Anmelderin. In diesem zweiten Verfahrensschritt wird Arsen sowie die gegebenenfalls vorhandenen Störelemente aus der wäßrigen Wertmetall-Lösung in die organischen, Hydroxamsäuren und gegebenenfalls Modifier enthaltenden Lösungen überführt. Bei den in der Wertmetallelektrolytlösung vorherrschenden pH-Werten werden fast ausschließlich die Störelemente in die organische Phase überführt. Abgesehen vom pH-Wert spielen auch die Parameter Kontaktierungszeit (Verweilzeit), Temperatur und Konzentration an Extraktanden, sowie gegebenenfalls an Modifier, eine Rolle.

Die Kontaktierungszeit ist für die verschiedenen Störelemente durchaus unterschiedlich. So wird beispielsweise desto mehr Arsen extrahiert, je länger die Kontaktierungszeit ist. Für Antimon, Wismut und Eisen führen dagegen kurze Kontaktierungszeiten (1 bis 5 Minuten) zur Extraktion der Hauptmenge. Bei längeren Kontaktierungszeiten wird bei festgelegter Reagenzkonzentration ein Teil der schneller extrahierten Störelemente durch Arsen wieder verdrängt. Je nach den Störelementen, die extrahiert werden sollen, muß wegen den teilweise gegenläufigen Tendenzen während der Extraktion, die Kontaktierungszeit für das zu extrahierende Störelement angepaßt werden. Sollen möglichst alle Störelemente extrahiert werden, ist ein Kompromiß zu finden, dem am besten Rechnung getragen wird, wenn die Kontaktierungszeit 1 bis 60 Minuten, vorzugsweise 5 bis 20 Minuten beträgt.

Die Konzentration an Hydroxamsäuren in den organischen Lösungen wird dadurch begrenzt, daß bei hohen Konzentrationen der Hydroxamsäuren die Viskosität während der Beladung mit den Störelementen so stark ansteigt, daß bei einer kontinuierlichen Verfahrensweise eine effiziente Vermischung der beiden Phasen nicht mehr gewährleistet ist. Außerdem wird die Phasentrennung mit steigender Viskosität erheblich erschwert. Daher ist es bevorzugt, die organischen Lösungen von Hydroxamsäuren mit einer Konzentration von 0,1 bis 2 Mol/l organische Lösung, bevorzugt in einer Konzentration von 0,3 bis 1,0 Mol/l organische Lösung zu verwenden.

Die Temperatur während der Extraktion liegt üblicherweise im Bereich von 20 bis 70 °C, bevorzugt im Bereich von 30 bis 60 °C. Zwar zeigen Extraktionskurven bei höheren Temperaturen höhere Extraktionsraten für Arsen in die organische Phase, aber bei höheren Temperaturen als 70 °C werden die Hydroxamsäuren instabiler. Da Kupfer-Raffinationselektrolytlösungen meist Temperaturen im Bereich von 50 bis 60 °C aufweisen, kann die aus der Elektrolyse abgezogene Lösung direkt dem erfindungsgemäßen Verfahren unterworfen werden. Demnach ist eine kontinuierliche Verfahrensweise möglich, die kein gesondertes Erwärmen vor der Extraktion mehr erfordert.

Letztlich spielen auch die Volumenverhältnisse an eingesetzter organischer und wäßriger Phase eine Rolle, die im Bereich von 1:10 bis 10:1, vorzugsweise im Bereich von 1,5:1 bis 1:1,5 und insbesondere 1:1 liegt.

Prinzipiell werden im zweiten Verfahrensschritt b) die wäßrige und die organische Lösung intensiv miteinander gemischt. Dies kann beispielsweise dadurch geschehen, daß man sie in kontinuierlicher Verfahrensweise einem so genannten "Mixer-Settler" zuführt, sie in diesem bei der angegebenen Temperatur über die angegebenen Zeit miteinander vermischt und die Phasen im Settler abtrennen läßt.

Der dritte Verfahrensschritt c) ist nur dann notwendig, wenn in der Wertmetall-Lösung eines oder mehrere der Störelemente Antimon, Eisen oder Wismut neben Arsen vorlag. Dieses ist beispielsweise bei der Störelementkontrolle oder -entfernung aus Kupferraffinationselektrolytlösungen der Fall. In diesen Fällen gibt man zu der organischen Phase eine wäßrige, Antimon, Eisen oder Wismut komplexierende Säure zum Stripping. Bevorzugte komplexierende Säuren sind die an sich bekannten wie Oxalsäure, Phosphonsäuren, Salzsäure oder deren Mischungen. Besonders bevorzugt wird Salzsäure eingesetzt.

Die Überführung der aufgeführten Störelemente aus der beladenen organischen in die wäßrige Strip-Phase wird ebenfalls durch die Parameter Kontaktierungszeit, Temperatur und Konzentration des Komplexiermittels beeinflußt. Erhebliche Mengen an Störelementen werden bereits nach 30 Sekunden gestrippt. Eine Kontaktierungszeit über 10 Minuten bringt keine deutliche Verbesserung mehr; vorzugsweise liegt die Kontaktierungszeit zwischen 1 bis 3 Minuten. Die Temperaturen während des Strippings liegen bevorzugt im Bereich von 20 bis 60 °C und insbesondere bis 30 °C. Die besonders bevorzugte Salzsäure bringt bereits bei einer Konzentration von 3 mol/l wäßrige Phase ein vollständiges Stripping von Wismut. Um aber auch die gegebenenfalls vorhandenen Störelemente Antimon und Eisen möglichst effizient zu strippen, empfiehlt es sich die besonders bevorzugte Salzsäure in einer Konzentration von 5 bis 10 mol/l, vorzugsweise in einer Konzentration von 6 bis 8 mol/l einzusetzen. Unter diesen Umständen wird das zwingend vorhandene Arsen nur in äußerst geringen Mengen gestrippt, so daß man unter den angegebenen Bedingungen eine Trennung von Arsen mit den gegebenenfalls anderen Störelementen hat. Das Volumenverhältnis von organischer, Störelement enthaltender Phase zu wäßriger, Salzsäure enthaltender Phase kann im Bereich von 1:10 bis 10:1, vorzugsweise 1,5:1 bis 1:1,5, insbesondere 1:1 betragen. Dieses Stripping erfolgt analog zum Verfahrensschritt b) durch intensives Mischen der Phasen. Dies kann beispielsweise in einer kontinuierlichen Verfahrensweise mit einem Mixer-Settler unter den angegebenen Bedingungen erfolgen.

Im vierten Verfahrensschritt d) wird die noch mit Arsen beladene Phase, die nach Phasentrennung nach den Verfahrensschritten b) oder gegebenenfalls c) anfällt, mit einer wäßrigen, Wertmetall enthaltenden Lösung gestrippt. Als Wertmetalle kommen genau jene in Betracht, die unter Verfahrensschritt a) vorgelegen haben. Um keine zusätzlichen Elemente in das gesamte Verfahren einzuschleusen, ist es daher bevorzugt, artgleiche Wertmetalle einzusetzen. So wird beispielsweise das Stripping von Arsen mit einer Kupfer-Ionen enthaltenden wäßrigen Lösung durchgeführt, wenn in Verfahrensschritt a) die zu extrahierende Wertmetall-Lösung eine Kupferlösung war. Damit nun Arsen mit einer wäßrigen Kupfer-Lösung aus organischen Lösungen gestrippt werden kann, von der sie in Verfahrensschritt a) abgetrennt worden war, ist es zwingend notwendig, den pH-Wert zu erhöhen auf den Bereich von 1,5 bis 5, vorzugsweise 1,5 bis 3,5. Für das Stripping von Arsen mit einer wäßrigen Kupfer-Ionen enthaltenden Lösung werden ganz besonders bevorzugt pH-Werte von 1,5 bis 2,5 eingestellt. Da bei dem Stripping von Arsen die wäßrige Lösung saurer wird, muß mit einer Base, vorzugsweise Natriumhydroxid, der pH-Wert nachgestellt werden.

Da sich das erfindungsgemäße Verfahren bevorzugt auf Kupferelektrolytlösungen bezieht, werden bevorzugt Kupfer-Ionen enthaltende wäßrige Lösungen in Verfahrensschritt d) eingesetzt. Die Konzentrationen an Kupfer-Ionen in der wäßrigen Lösung richtet sich nach der Konzentration an Arsen in der organischen Phase und muß für ein effizientes Stripping mindestens äquimolar sein. Eine Konzentration über 40 g/l wäßrige Phase sollte aber vermieden werden, da insbesondere bei kontinuierlicher Betriebsweise Fällungen von schwerlöslichen Kupferverbindungen auftreten können. Für ein kontinuierliches Strip-Verfahren in Verfahrensschritt d) wird die Kupfer-Ionen enthaltende Lösung im Kreislauf gefahren, wodurch sich Kupfer ab- und Arsen anreichert. Damit ein effizientes Arsen-Stripping gewährleistet ist, muß daher das Wertmetall (Kupfer in Form eines Salzes) nachgegeben (nachgeschärft) werden. Durch die kontinuierliche Verfahrensweise können hochkonzentrierte wäßrige Arsen-Lösungen entstehen, die etwa bei einem Gehalt von 30 g/l aus dem Kreislauf herausgenommen und aufgearbeitet werden. Bevor man die Arsenlösungen aus dem Kreislauf herausnimmt, ist es zweckmäßig, diese neben Arsen und noch Kupfer enthaltende Lösung ohne Nachschärfen im Kreislauf zu fahren, damit der Kupfergehalt sich minimiert, wodurch die Arsen-Aufbereitung erleichtert wird. Über die Verweilzeit und die Temperatur während des Arsen Strippings kann insgesamt bei gegebenem pH-Wert die Menge an Arsen beeinflußt werden. So steigt mit längerer Kontaktierungszeit die Menge an gestripptem Arsen. Aus ökonomischen Gründen sucht man auch hier einen Kompromiß zwischen möglichst hohen Mengen an gestripptem Störelement und kurzer Verweilzeit. Die Kontaktierungszeiten können prinzipiell zwischen 1 und 60 Minuten liegen und betragen bevorzugt 5 bis 30 Minuten. Auch über steigende Temperaturen kann die Menge an gestripptem Arsen vergrößert werden. Die Temperaturen sollten 70 °C wegen zurückgehender Stabilität der Hydroxamsäure möglichst nicht überschreiten. Bevorzugt liegen die Temperaturen zwischen 25 bis 70 und vorzugsweise zwischen 40 bis 60 °C. Das Stripping wird analog den Verfahrensschritten b) und gegebenenfalls c) durch intensives Mischen der Phasen miteinander erreicht. Die Volumenverhältnisse an wäßriger Phase zu organischer Phase liegen bevorzugt im Bereich von 1,5:1 bis 1:1,5 und insbesondere 1:1. Für die kontinuierliche Verfahrensweise empfiehlt sich zum Stripping ein Mixer-Settler.

Nach dem fünften Verfahrensschritt e) werden die nun als wäßrige Lösung vorliegenden Störelemente Arsen und gegebenenfalls Eisen, Wismut oder Antimon auf an sich bekannte Weise aufgearbeitet, beispielweise durch Fällungsreaktionen wie der Sulfidfällung, wobei schwer- oder unlösliche Verbindungen entstehen, die der Deponie zugeführt werden können, oder wie der pH-Senkung, wobei wiederverwertbare Produkte wie Arsenoxid entstehen. Die Lösungen können aber auch in verdünnter oder in konzentrierter Form als Lösung weiterverwendet werden.

Einer der besonderen Vorteile des erfindungsgemäßen Verfahrens liegt darin, daß es problemlos als kontinuierliches Verfahren betrieben werden kann. Wichtig ist bei dem erfindungsgemäßen Verfahren, daß der Verfahrensschritt c) stets vor oder gleichzeitig mit Verfahrensschritt d) erfolgt. Wenn man möchte, kann man dem Verfahrensschritt c) eine Waschstufe anschließen, um eventuell noch geringe Mengen an komplexierender Säure zu entfernen, die ansonsten in Verfahrensschritt d) zu Störungen führen können. Die in Verfahrensschritt d) nach Phasentrennung anfallende, Wertmetall (Kupfer) enthaltende Organphase wird wieder der Extraktion gemäß Verfahrensschritt a) zugeführt (Kreislauf), wobei durch Kontakt mit der wäßrigen, stark mineralsauren Wertmetall-Lösung das Wertmetall (Kupfer) wieder aus der beladenen Organphase in die wäßrige Phase (z. B. Kupferraffinationselektrolyt) gestrippt wird.

In speziellen Fällen kann die in a) eingesetzte wäßrige stark mineralsaure Wertmetall-Lösung geringe Mengen an Polymeren wie Leime oder auch Thioharnstoff enthalten. Diese sind häufig in Kupfer-Raffinationselektrolytlösungen enthalten, damit sich das Wertmetall bei der Elektrolyse glatt abscheidet. Diese Polymere können das erfindungsgemäße Verfahren stören. Daher sollte man gegebenenfalls eine Vorbehandlungsstufe einrichten, bei der vor der Extraktion die Wertmetall-Lösung mit organischen Lösungsmitteln versetzt und die Polymeren entfernt werden. Als organische Lösungsmittel empfehlen sich die bereits im Zusammenhang mit den Hydroxamsäuren beschriebenen, insbesondere hochsiedende Kerosine.

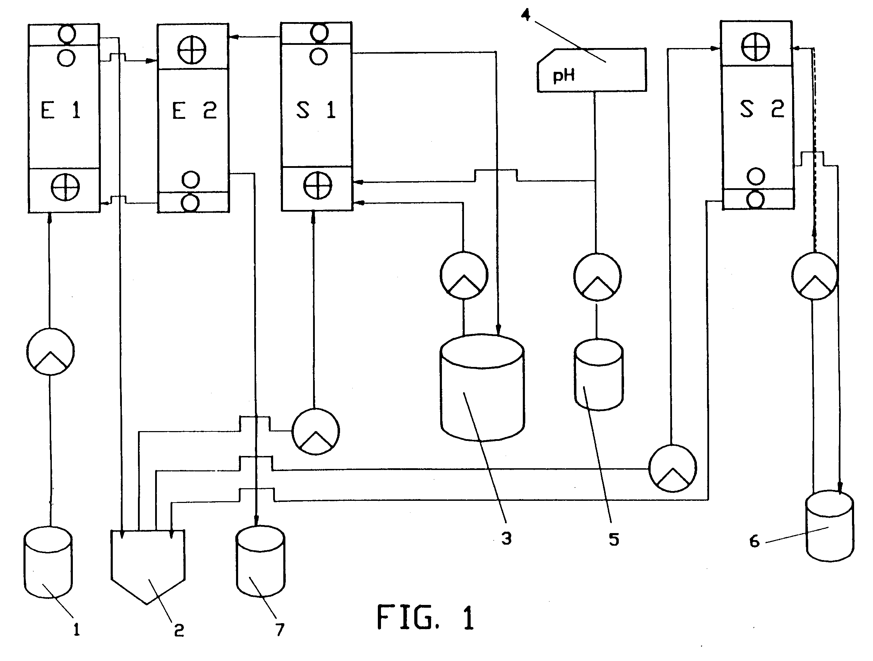

Einer Ausfübrungsform der vorliegenden Erfindung entsprechend wird das erfindungsgemäße Verfahren kontinuierlich durchgeführt, wobei die einzusetzenden Lösungen in Art und Menge sowie die einzuhaltenden Parameter der vorherigen Beschreibung entnommen werden können. Bei der kontinuierlichen Verfahrensweise (siehe Figur Fig. 1) wird im einfachsten Ausführungsbeispiel die Extraktionsstufe(n) mit einer Stripping-Stufe S1 kombiniert. Diese einfachste Ausführungsform bietet sich an, wenn Arsen das ausschließliche Störelement ist. Sobald Antimon, Eisen oder Wismut als zusätzliche Störelemente in der Wertmetall-Lösung vorhanden sind, ist ein zusätzlicher Kreislauf zum Strippen S2 anzuschließen. Diese eine bzw. diese zwei Kreisläufe können noch ergänzt werden durch eine Vorreinigung wie sie bereits beschrieben worden ist. In Figur Fig. 1 beispielshaft ist eine kontinuierliche Verfahrensweise dargestellt, wobei zwei Extraktionsstufen, E1 und E2 hintereinander geschaltet sind, die mit einer Stripping S1 Stufe oder wahlweise mit einer zweiten Stripping Stufe S2 kombiniert sind. Die Extraktionen in den Extraktionsstufen E1 und E2 erfolgen im Gegenstromprinzip. Dabei wird die wäßrige, eine bestimmte Menge an Arsen und gegebenenfalls Antimon, Eisen oder Wismut enthaltende Wertmetall-Lösung aus Behälter 1 in die Extraktionsstufe E1 gepumpt. Dort trifft sie auf organische Lösungen der Hydroxamsäuren, die aus Behälter 2 über die Stripping Stufe S1 und die Extraktionsstufe E2 in die Extraktionsstufe 1 gelangt ist. In der Extraktionsstufe E1 und E2 werden die Störelemente aus der wäßrigen Wertmetall-Lösung in die organischen Lösungen mit den Hydroxamsäuren extrahiert. Diese organischen Lösungen werden im Behälter 2 gesammelt. Die mit den Störelementen beladenen organischen Lösungen werden sofern sie nur Arsen als Störelement enthalten, in die Stripping Stufe S1 gepumpt. Dort treffen sie mit einer wäßrigen Wertmetall enthaltenden Lösung, die aus Behälter 3 gepumpt wird, zusammen. Der pH-Wert in der Stripping Stufe S1 wird ständig mit dem pH-Meßgerät 4 kontrolliert, wobei mit Basen, vorzugsweise Natriumhydroxid in Form einer wäßrigen Lösung aus Behälter 5 auf den pH-Wert 1,5 bis 5 eingestellt wird. Nach dem Stripping in der Stripping-Stufe S1 wird die wäßrige, Arsen enthaltende Lösung wieder in Behälter 3 gegeben. Demnach wird die wäßrige, Wertmetall (Kupfer) enthaltende Lösung im Kreis geführt, vorzugsweise so lange bis die Lösung einen Arsen-Gehalt von etwa 30 g/l erreicht, wobei laufend Wertmetall (Kupfer) nachgegeben wird. Nach Erreichen des Arsen-Gehalts wird die Lösung aus dem Kreislauf geschleust, gegebenenfalls nach weiteren Strip-Kreisläufen zur Minimierung des Kupfers, und auf bekannte Weise aufgearbeitet. Die organische, Wertmetall enthaltende Phase wird entweder direkt der Extraktionsstufe E1 oder über die Extraktionsstufe E2 der E1 zugeführt. Dort treffen sie wieder mit der wäßrigen, Wertmetallelektrolyt enthaltenden Lösung zusammen, wobei bei den dort vorherrschenden pH-Werten das Wertmetall in die wäßrige Lösung gestrippt wird. Die wäßrige, von den Störelementen befreite bzw. reduzierte Wertmetall-Lösung (Raffinat) wird aus E1 oder E2 in Behälter 7 überführt. Damit ist der Kreislauf nach den in den Anspruch 1 als a), b) und d) sowie e) geschilderten Verfahrensschritten abgeschlossen.

Sofern noch Antimon, Eisen und Wismut als Störelemente zugegen sind, wird vor oder gleichzeitig mit dem Arsen Stripping in der Stripping Stufe S1 die mit Störelementen beladene organische Phase aus Behälter 2 in die Stripping Stufe S2 gepumpt. In der Stripping Stufe S2 treten sie in Kontakt mit der beschriebenen komplexierenden Säure, die aus Behälter 6 in die Stripping Stufe S2 gepumpt wird. Nach dem Stripping wird die wäßrige die Störelemente Antimon, Wismut und Eisen sowie komplexierende Säure enthaltende Phase wieder in Behälter 6 gelassen, das heißt, es wird im Kreislauf gefahren. Der Kreislauf wird vorzugsweise solange geführt, bis in der wäßrigen Phase ein Gesamt-Störmetall-Gehalt von etwa 6 g/l erreicht wird. Dann wird die Lösung aus dem Kreislauf geschleust und die Störelemente auf bekannte Weise aufgearbeitet; die befreite, komplexierende Säuren enthaltende Phase wird wieder in den Kreislauf eingeführt. Die organische Phase, die noch mit Arsen beladen sein kann, sofern die Stripping Stufe S2 gleichzeitig mit der Strip Stufe S1 geschaltet ist, kann, wenn gewünscht, noch einer wäßrigen Waschstufe unterzogen werden, um Reste von komplexierenden Säuren auszuwaschen (nicht in Fig. 1 dargestellt), die ansonsten zu Störungen im Stripping S1 führen können. Dann wird die organische Phase in den Behälter 2 zurückgeführt. Damit ist der Kreislaufprozeß des zweiten Strippings geschlossen.

### Beispiele

### Beispiel 1 Störelement-Extraktion

Eine Praxis-Elektrolytlösung, entnommen einer Kupferraffinationselektrolyse, der Zusammensetzung (in g/l)
15 Arsen (As), 0,22 Wismut (Bi), 0,21 Antimon (Sb), 0,18 Eisen (Fe), 52 Kupfer (Cu), 17 Nickel (Ni) und 180 g Schwefelsäure
wurde versetzt mit dem unter dem Handelsnamen "Escaid^{R} 120 " erhältlichen Kerosin.

In dem organischen Lösungsmittel Kerosin waren pro Liter 0,5 mol Hydroxamsäure gelöst, die aus einem Gemisch von Carbonsäuren der Formel 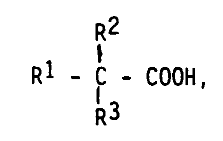
in der die Summe der Alkylreste R¹ bis R³ im Bereich von 7 bis 17 liegt, hergestellt worden sind (Handelsprodukt Versatic^{R}).

Des weiteren waren im Kerosin pro Liter 0,5 Mol an dem Modifier i-Hexadecylalkohol^{R}, ein Gemisch primärer Hexadecanole (Verkaufsprodukt Hoechst), gelöst.

Die Extraktion wurde bei diskontinuierlicher Betriebsweise bei
a) Raumtemperatur (20 bis 25 °C) und
b) 50 °C
im Volumenverhältnis von wäßriger Elektrolytlösung:Kerosinlösung von 1:1 vorgenommen. Die Mengen an extrahierten Störelementen in Abhängigkeit von der Verweilzeit (= Kontaktierungszeit) sind der folgenden Tabelle 1 zu entnehmen. Die Angaben der Volumenverhältnisse erfolgt im folgenden verkürzt als das Verhältnis organische Phase (O) zu wäßriger Phase (A) oder umgekehrt.

**Tabelle 1**

| Abhängigkeit der Extraktion von der Verweilzeit | | | | |
|---|---|---|---|---|
| Extrahierte Menge in g/l nach Min. | As | Fe | Sb | Bi |
| Raumtemp. extrahierte Menge nach | | | | |
| 3 | 3,3 | 0,17 | 0,17 | 0,11 |
| 5 | 4,0 | 0,19 | 0,17 | 0,11 |
| 10 | 4,5 | 0,22 | 0,20 | 0,11 |
| 20 | 6,3 | 0,19* | 0,19* | 0,10* |
| 30 | 6,8 | 0,17* | 0,20 | 0,09* |
| 40 | 7,2 | 0,16* | 0,20 | 0,09* |
| 60 | 7,4 | 0,15 | 0,19* | 0,09* |

| 50 °C extrahierte Menge nach | | | | |
|---|---|---|---|---|
| 3 | 5,0 | 0,19 | 0,16 | 0,10 |
| 5 | 5,8 | 0,19 | 0,16 | 0,10 |
| 10 | 6,7 | 0,15* | 0,16 | 0,10 |
| 15 | 7,2 | 0,19* | 0,15* | 0,08 |
| 20 | 7,7 | 0,21 | 0,16 | nicht bestimmt |

| | | | | |
|---|---|---|---|---|
| * aufgrund steigender extrahierter As-Mengen kommt es zu Verdrängungserscheinungen | | | | |

Tabelle 1 zeigt, daß eine effiziente As-Extraktion bei RT längere Verweilzeiten erfordert, wohingegen die Sb, Bi und Fe-Extraktion effizienter bei deutlich kürzeren Verweilzeiten erfolgt. Bei höheren Temperaturen verbessert sich die As-Extraktion erheblich, so daß kürzere Verweilzeiten möglich sind.

### Beispiel 2 Stripping As, Temperatur und Verweilzeit

Eine nach der Extraktion gemäß Beispiel 1 erhaltene Organophase mit 0,5 mol/l Modifier (Zusammensetzung in g/l: 7,9 As; 0,22 Fe; 0,20 Sb; 0,11 Bi) wurde mit einer wäßrigen Kupfersulfat-Lösung gestrippt (10 g Kupfer-Ionen pro Liter; O:A Volumen-Verhältnis 1:1).

Wie in Tabelle 2 ersichtlich, wurden die Verweilzeiten oder die Temperaturen geändert; der pH-Wert wurde konstant auf 2,2 gehalten (nachtitriert mit Natronlauge).

**Tabelle 2**

| Stripping As; Verweilzeiten, Temperaturen | | |
|---|---|---|
| Temperatur in °C | Verweilzeiten in Min. | extrahierte Menge in % As |
| 25 | 10 | 22 |
| 50 | 2 | 32 |
| | 4 | 41 |
| | 8 | 50 |
| | 10 | 52 |
| | 15 | 57 |
| | 30 | 66 |
| | 60 | 72 |
| 70 | 10 | 74 |

Aus Tabelle 2 ist ersichtlich, daß das Stripping von As nahezu linear mit steigender Temperatur (Verweilzeit = 10 Min.) ist. Aus Stabilitätsgründen der Hydroxamsäure sind jedoch Temperaturen unter 70 °C erwünscht. Mit steigender Verweilzeit steigt ebenfalls die absolute gestrippte Menge an As, wobei nach etwa 20 bis 30 Minuten bereits relativ große Mengen an As vorliegen im Verhältnis zum Zeitaufwand.

Prinzipiell werden beim Stripping von As unter den angegebenen Bedingungen (T = 50 °C, Verweilzeit 2 bis 60 Minuten) auch ein Teil der Störelemente Sb (ungefähr 60 bis 70 mg/l, entsprechend 30 bis 40 %) und Bi (8 bis 15 mg/l, entsprechen 5 bis 10 %) gestrippt, die aber absolut äußerst geringe Mengen sind.

### Beispiel 3 Stripping As; Modifier-Konzentration

Eine Organophase aus "Escaid^{R} 120 ", enthaltend pro Liter: 0,5 mol Hydroxamsäure analog Beispiel 1, beladene Störelemente (g/l: 7,9 As; 0,22 Fe; 0,20 Sb; 0,11 Bi) und gemäß Tabelle 3 variierende Mengen an i-Hexadecylalkohol wurde analog Beispiel 2 mit einer wäßrigen Kupfersulfat-Lösung (10 g Kupfer-Ionen pro Liter), im Volumenverhältnis O:A = 1:1 bei pH = 2,2 und Temperatur = 50 °C und einer Verweilzeit = 10 Minuten behandelt. In Tabelle 3 sind die in der Organphase verbliebenen Störelemente nach dem Stripping aufgeführt (in g/l) und in Klammern dahinter das Stripping in (%).

**Tabelle 3**

| Stripping; Modifier-Konzentration | | | | |
|---|---|---|---|---|
| Modifier-Konzentration in mol pro Liter | Organphase (g/l) | | | |
| | As | Fe | Sb | Bi |
| 0 | 5,3 (32) | 0,18 | 0,13 | 0,08 |
| 0,1 | 4,6 (42) | 0,14 | 0,12 | 0,09 |
| 0,25 | 4,2 (47) | 0,13 | 0,12 | 0,09 |
| 0,5 | 3,8 (52) | 0,12 | 0,12 | 0,08 |
| 1,0 | 3,2 (60) | 0,13 | 0,12 | 0,09 |

### Beispiel 4 Vergleich As-Stripping mit CuSO₄/H₂O

Eine Organophase aus Escaid^{R} 120, enthaltend 0,5 mol/l Hydroxamsäure nach Beispiel 1 und in den üblichen Mengen beladene Störelemente (As 7,9 g/l) und
a) 0
b) 0,5 mol i-Hexadecylalkohol pro Liter wurde
   - mit CuSO₄-Lösung (10 g Kupfer-Ionen pro Liter) bei pH = 2,2
   - mit destilliertem Wasser bei pH = 3,3 gemäß der DE-A-38 36 731 versetzt und bei einer Temperatur = 50 °C gemäß Beispiel 2 mit einer Verweilzeit von 60 Minuten behandelt. In Tabelle 4 ist die gestrippte Menge an As in % angegeben.

**Tabelle 4**

| As-Stripping mit CuSO₄ im Vergleich zu Wasser | |
|---|---|
| | gestrippte Menge As in % |
| pH = 2,2 | a) ohne Modifier 54 |
| CuSO₄-Lösung | b) mit Modifier 72 |
| pH = 3,3 | a) ohne Modifier 8 |
| Wasser | b) mit Modifier 31 |

Aus Tabelle 4 ist ersichtlich, daß mit einer Kupfersulfat-Lösung immer bessere Strippingergebnisse für As erzielt werden, mit oder ohne Modifier.

### Beispiel 5 Stripping von Sb, Bi und Fe

Eine Organophase von "Escaid^{R} 120" enthaltend pro Liter 0,5 mol Hydroxamsäure nach Beispiel 1 0,5 mol i-Hexadecylalkohol (Modifier) beladene Störelemente (g/l): 7,9 As; 0,22 Fe; 0,20 Sb; 0,11 Bi wurden mit verschieden konzentrierter Salzsäure (siehe Tabelle 5) im Volumenverhältnis O:A = 1:1 versetzt. Das Stripping erfolgte durch einmaliges Schütteln bei Raumtemperatur (20 bis 25 °C) und einer Verweilzeit von 2 Minuten. In Tabelle 5 sind prozentuale Angaben zu finden, wieviel Prozent an Störelementen mit HCl aus der organischen Phase gestrippt wurden.

**Tabelle 5**

| Stripping von Sb, Fe und Bi (in %) | | | | |
|---|---|---|---|---|
| Konzentration der HCl in mol/l | Fe | Sb | Bi | As |
| 3 | 14 | 1 | 100 | 7 |
| 4 | 27 | 3 | 100 | 6 |
| 5 | 58 | 19 | 100 | 5 |
| 6 | 65 | 38 | 100 | 4 |
| 8 | 76 | 59 | 100 | 4 |

Aus Tabelle 5 ist ersichtlich, daß vor allem durch Salzsäure mit 5 bis 8 Mol Salzsäure pro Liter unter den angegebenen Bedingungen Sb, Bi und Fe gut und As kaum gestrippt werden. Damit sind in Kombination des As-Strippings mit der Kupfersulfat-Lösung selektive, unabhängige Wiedergewinnungen der Störelemente möglich.

## Patentansprüche

1. Verfahren zur Abtrennung der Störelemente Arsen und gegebenenfalls Antimon, Eisen oder Wismut aus Wertmetall-Lösungen im Wege der Solvent-Extraktion und Trennung der Störelemente untereinander, wobei man
a) die wäßrigen, stark mineralsauren Wertmetall-Lösungen mit organischen Lösungen von Hydroxamsäuren der allgemeinen Formel (I) versetzt 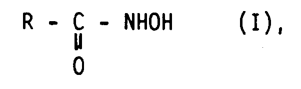 in der R für einen Alkyl- und/oder Alkenylrest mit 6 bis 22
C-Atomen, Cycloalkylrest oder Arylrest mit bis zu 19
C-Atomen steht,
b) die wäßrige und organische Phase über eine ausreichende Verweilzeit miteinander mischt und die Phasen trennt, dadurch gekennzeichnet, daß man danach
c) im Falle der Anwesenheit von Antimon, Eisen oder Wismut diese aus der organischen Phase mit wäßrigen, Antimon, Eisen oder Wismut komplexierenden Säuren strippt und gleichzeitig oder anschließend
d) Arsen aus der organischen Phase mit einer wäßrigen Wertmetall-Ionen enthaltenden Lösung bei einem gegenüber a) höheren pH-Wert im Bereich von 1,5 bis 5, strippt und
e) die wäßrigen, Störelemente enthaltenden Lösungen in an sich bekannter Weise aufarbeitet.

2. Verfahren nach Anspruch 1, dadurch gekennzeichnet, daß Arsen und die gegebenenfalls vorhandenen Störelemente Antimon, Wismut oder Eisen von wäßrigen Kupfer-Elektrolytlösungen und insbesondere von wäßrigen, schwefelsauren Kupfer-Raffinationselektrolyt-Lösungen abtrennt werden.

3. Verfahren nach einem der Ansprüche 1 oder 2, dadurch gekennzeichnet, daß man für die organischen Lösungen Kohlenwasserstoffe oder deren Mischungen, chlorierte Kohlenwasserstoffe, Ketone oder Ether, bevorzugt Kerosine oder deren Mischungen, einsetzt.

4. Verfahren nach einem der Ansprüche 1 bis 3, dadurch gekennzeichnet, daß organische Lösungen von Hydroxamsäuren der allgemeinen Formel (I) zugesetzt werden, in der R für verzweigte, gesättigte Alkylreste mit 6 bis 22 C-Atomen, bevorzugt mit 7 bis 19 C-Atomen und insbesondere für neo-Alkylreste der allgemeinen Formel (II) steht, 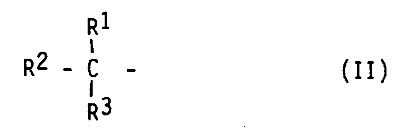 in der die Summe der Zahl der C-Atome der Reste R¹, R² und R³ im Bereich von 6 bis 18 liegt.

5. Verfahren nach einem der Ansprüche 1 bis 4, dadurch gekennzeichnet, daß die Hydroxamsäuren der allgemeinen Formel (I) in einer Konzentration von 0,1 bis 2,0 mol/l organische Lösung, bevorzugt in einer Konzentration von 0,3 bis 1,0 mol/l organische Lösung, enthalten sind.

6. Verfahren nach der Ansprüche 1 bis 5, dadurch gekennzeichnet, daß in den organischen Lösungen zusätzlich an sich bekannte Modifier, vorzugsweise langkettige verzweigte Alkohole, Phenole und/oder deren Ester enthalten sind.

7. Verfahren nach Anspruch 6, dadurch gekennzeichnet, daß die Modifier in einer Konzentration von 0,01 bis 2,0 mol/l organische Phase, bevorzugt in einer Konzentration von 0,1 bis 1 mol/l organische Phase, enthalten sind.

8. Verfahren nach einem der Ansprüche 1 bis 7, dadurch gekennzeichnet, daß man die wäßrige Wertmetall-Lösung und die organischen Lösungen der Hydroxamsäure(n), gegebenenfalls mit Modifier, über eine Zeit von 1 bis 60 Minuten, bevorzugt über eine Zeit von 5 bis 20 Minuten, miteinander mischt.

9. Verfahren nach einem der Ansprüchen 1 bis 8, dadurch gekennzeichnet, daß man die wäßrige Wertmetall-Lösung und die organischen Lösungen der Hydroxamsäure(n), gegebenenfalls mit Modifier, bei einer Temperatur von 20 bis 70 °C, bevorzugt bei einer Tempertur von 30 bis 60 °C, miteinander mischt.

10. Verfahren nach einem der Ansprüche 1 bis 9, dadurch gekennzeichnet, daß die wäßrige Wertmetall-Lösung in a) einen pH-Wert unter Null aufweist.

11. Verfahren nach einem der Ansprüche 1 bis 10, dadurch gekennzeichnet, daß man als komplexierende Säuren Oxalsäure, Phosphonsäuren und/oder Salzsäure, vorzugsweise Salzsäure einsetzt.

12. Verfahren nach Anspruch 11, dadurch gekennzeichnet, daß man Salzsäure in einer Konzentration von 5 bis 10 Mol/l wäßrige Phase, vorzugsweise in einer Konzentration von 6 bis 8 Mol/l wäßrige Phase einsetzt.

13. Verfahren nach einem der Ansprüche 11 oder 12, dadurch gekennzeichnet, daß man die wäßrige Salzsäure enthaltende Phase und die organische Antimon, Wismut oder Eisen enthaltende organische Phase strippt über eine Zeit von 30 Sekunden bis 10 Minuten, vorzugsweise 1 bis 3 Minuten.

14. Verfahren nach einem der Ansprüche 11 bis 13, dadurch gekennzeichnet, daß das Stripping von Antimon, Wismut oder Eisen bei Temperaturen im Bereich von 20 bis 60 °C, vorzugsweise bis 30 °C, durchgeführt wird.

15. Verfahren nach einem der Ansprüche 11 bis 14, dadurch gekennzeichnet, daß man die wäßrige Salzsäure enthaltende Lösung und die organische, Antimon, Wismut oder Eisen enthaltende Lösung in einem Volumenverhältnis von 1:10 bis 10:1, vorzugsweise von 1,5:1 bis 1:1,5, bei dem Stripping einsetzt.

16. Verfahren nach einem der Ansprüche 1 bis 10, dadurch gekennzeichnet, daß Arsen mit einer Kupfer-Ionen-Lösung gestrippt wird, wobei ein pH-Wert im Bereich von 1,5 bis 2,5 aufrechterhalten wird.

17. Verfahren nach Anspruch 16, dadurch gekennzeichnet, daß Arsen mit einer Kupfer-Ionen enthaltenden wäßrigen Lösung, die vorzugsweise mindestens in äquimolarer Konzentration, bezogen auf Arsen-Ionen Konzentration in organischer Phase, und höchstens eine Konzentration von 40 g/l Kupfer in wäßriger Phase hat, gestrippt wird.

18. Verfahren nach einem der Ansprüche 16 oder 17, dadurch gekennzeichnet, daß man die wäßrige, Kupfer-Ionen enthaltende Lösung und die organische, Arsen-Ionen enthaltende Lösung über eine Zeit von 1 bis 60 Minuten, vorzugsweise 5 bis 30 Minuten miteinander mischt.

19. Verfahren nach einem der Ansprüche 16 bis 18, dadurch gekennzeichnet, daß man die wäßrige Kupfer-Ionen enthaltende Lösung und die organische, Arsen enthaltende Lösung bei einer Temperatur von 25 bis 70 °C, vorzugsweise 40 bis 60 °C miteinander mischt.

20. Verfahren nach einem der Ansprüche 16 bis 19, dadurch gekennzeichnet, daß man die wäßrige, Kupfer-Ionen enthaltende Lösung und die organische, Arsen enthaltende Lösung in einem Volumenverhältnis von 1,5:1 bis 1:1,5 vorzugsweise von miteinander mischt.

21. Verfahren nach Anspruch 1, dadurch gekennzeichnet, daß man nach dem Arsen-Stripping die mit Wertmetall-Ionen beladene organische Phase mit der die Störelemente Arsen und gegebenenfalls Antimon, Eisen oder Wismut enthaltenden, wäßrigen, stark mineralsauren Wertmetall-Lösungen vermischt und dabei das Wertmetall strippt, so daß die organischen Lösungen von Hydroxamsäuren wiedereingesetzt werden können.

## Claims

1. A process for removal of the impurity elements arsenic and optionally antimony, iron or bismuth from solutions of valuable metals by solvent extraction and separation of the impurity elements from one another, in which
a) organic solutions of hydroxamic acids corresponding to general formula (I): 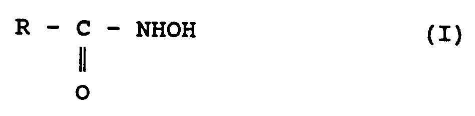 in which R is an alkyl and/or alkenyl radical containing 6 to 22 carbon atoms, a cycloalkyl radical or an aryl radical containing up to 19 carbon atoms,
are added to the agueous, strongly mineral acid valuable-metal solutions,
b) the aqueous phase and the organic phase are mixed together over an adequate residence time and the phases are separated,
characterized in that
c) where antimony, iron or bismuth are present, they are subsequently stripped from the organic phase with aqueous acids which complex antimony, iron or bismuth and, at the same time or thereafter,
d) arsenic is stripped from the organic phase with an aqueous solution containing valuable-metal ions at a higher pH value relative to a) in the range from 1.5 to 5 and
e) the aqueous solution containing impurity solutions are worked up by methods known per se.

2. A process as claimed in claim 1, characterized in that arsenic and the impurity elements antimony, bismuth or iron optionally present are removed from aqueous copper electrolyte solutions and, more particularly, from aqueous sulfuric acid copper electrorefining solutions.

3. A process as claimed in claim 1 or 2, characterized in that hydrocarbons or mixtures thereof, chlorinated hydrocarbons, ketones or ethers, preferably kerosines or mixtures thereof, are used for the organic solutions.

4. A process as claimed in any of claims 1 to 3, characterized in that organic solutions of hydroxamic acids corresponding to general formula (I), in which R represents branched saturated alkyl radicals containing 6 to 22 carbon atoms and preferably 7 to 19 carbon atoms, more particularly neo-alkyl radicals corresponding to general formula (II): 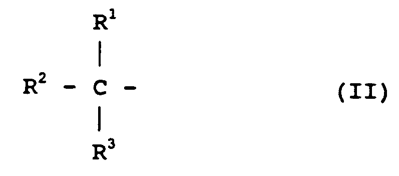 in which the sum of the carbon atoms in R¹, R² and R³ is from 6 to 18,
are added.

5. A process as claimed in any of claims 1 to 4, characterized in that the hydroxamic acids corresponding to general formula (I) are present in a concentration of 0.1 to 2.0 moles/l of organic solution and preferably in a concentration of 0.3 to 1.0 mole/l of organic solution.

6. A process as claimed in claims 1 to 5, characterized in that modifiers known per se, preferably long-chain branched alcohols, phenols and/or esters thereof, are additionally present in the organic solutions.

7. A process as claimed in claim 6, characterized in that the modifiers are present in a concentration of 0.01 to 2.0 mole/l of organic phase and preferably in a concentration of 0.1 to 1 mole/l of organic phase.

8. A process as claimed in any of claims 1 to 7, characterized in that the aqueous valuable-metal solution and the organic solutions of the hydroxamic acid(s) are mixed together, optionally with modifier, over a period of 1 to 60 minutes and preferably over a period of 5 to 20 minutes.

9. A process as claimed in any of claims 1 to 8, characterized in that the aqueous valuable-metal solution and the organic solutions of the hydroxamic acid(s) are mixed together, optionally with modifier, at a temperature of 20 to 70°C and preferably at a temperature of 30 to 60°C.

10. A process as claimed in any of claims 1 to 9, characterized in that the aqueous valuable-metal solution in a) has a pH value below 0.

11. A process as claimed in any of claims 1 to 10, characterized in that oxalic acid, phosphonic acids and/or hydrochloric acid, preferably hydrochloric acid, is/are used as the complexing acids.

12. A process as claimed in claim 11, characterized in that hydrochloric acid is used in a concentration of 5 to 10 moles/l of aqueous phase and preferably in a concentration of 6 to 8 moles/l of aqueous phase.

13. A process as claimed in claim 11 or 12, characterized in that the aqueous phase containing hydrochloric acid and the organic phase containing antimony, bismuth or iron are stripped over a period of 30 seconds to 10 minutes and preferably 1 to 3 minutes.

14. A process as claimed in any of claims 11 to 13, characterized in that the stripping of antimony, bismuth or iron is carried out at temperatures in the range from 20 to 60°C and preferably at temperatures of up to 30°C.

15. A process as claimed in any of claims 11 to 14, characterized in that the aqueous solution containing hydrochloric acid and the organic solution containing antimony, bismuth or iron are used for stripping in a ratio by volume of 1:10 to 10:1 and preferably 1.5:1 to 1:1.5.

16. A process as claimed in any of claims 1 to 10, characterized in that arsenic is stripped with a copper ion solution, a pH value of 1.5 to 2.5 being maintained.

17. A process as claimed in claim 16, characterized in that arsenic is stripped with an aqueous solution containing copper ions which preferably has an at least equimolar concentration, based on the concentration of arsenic ions in the organic phase, and at most a concentration of 40 g/l of copper in the aqueous phase.

18. A process as claimed in claim 16 or 17, characterized in that the aqueous solution containing copper ions and the organic solution containing arsenic ions are mixed together over a period of 1 to 60 minutes and preferably 5 to 30 minutes.

19. A process as claimed in any of claims 16 to 18, characterized in that the aqueous solution containing copper ions and the organic solution containing arsenic are mixed together at a temperature of 25 to 70°C and preferably at a temperature of 40 to 60°C.

20. A process as claimed in any of claims 16 to 19, characterized in that the aqueous solution containing copper ions and the organic solution containing arsenic are mixed together in a ratio by volume of 1.5:1 to 1:1.5.

21. A process as claimed in claim 1, characterized in that, after the stripping of arsenic, the organic phase charged with valuable-metal ions is mixed with aqueous, strongly mineral acid valuable-metal solutions containing the impurity elements arsenic and optionally antimony, iron or bismuth and the valuable metal is stripped so that the organic solutions of hydroxamic acids can be reused.

## Revendications

1. Procédé de séparation des éléments perturbateurs arsenic et éventuellement antimoine, fer ou bismuth de solutions de métaux de valeur au moyen d'une extraction par solvant et séparation des éléments perturbateurs entre eux, procédé dans lequel :
a) on mélange les solutions aqueuses contenant de fortes quantités d'acides minéraux de métal de valeur avec des solutions organiques d'acides hydroxamiques de formule générale (I). 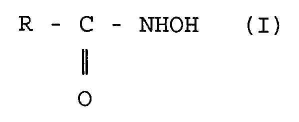 dans laquelle R représente un radical alkyle et/ou alcényle avec 6 à 22 atomes de C, un radical cyclo alkyle ou un radical aryle avec jusqu'à 19 atomes de C,
b) on mélange ensemble la phase aqueuse et organique pendant une durée suffisante et on sépare les phases, caractérisé en ce qu'ensuite,
c) dans le cas de présence d'antimoine, de fer ou de bismuth on extrait ceux-ci à partir de la phase organique avec des acides aqueux complexants antimoine, fer ou bismuth et en même temps ou ensuite,
d) on extrait l'arsenic de la phase organique avec une solution aqueuse contenant des ions de métal de valeur avec une valeur de pH supérieure par rapport à a) située dans la gamme de 1,5 à 5 et,
e) on retraite les solutions aqueuses, contenant des éléments perturbateurs d'une manière connue en soi.

2. Procédé selon la revendication 1, caractérisé en ce que l'arsenic et les éléments perturbateurs présents éventuellement antimoine, bismuth et fer sont séparés de solutions aqueuses d'électrolyte de cuivre et en particulier de solutions aqueuses d'électrolyte du raffinage du cuivre à l'acide sulfurique.

3. Procédé selon une des revendications 1 ou 2, caractérisé en ce qu'on met en oeuvre pour les solutions organiques d'hydrocarbures ou leurs mélanges, des hydrocarbures chlorés, des cétones ou des éthers, de préférence de la kérosine ou leurs mélanges.

4. Procédé selon une des revendications 1 à 3, caractérisé en ce qu'on ajoute des solutions organiques d'acides hydroxamiques de formule générale (I), dans laquelle R représente des radicaux alkyle ramifiés, saturés avec 6 à 22 atomes de C, de préférence avec 7 à 19 atomes de C et en particulier des neo-radicaux d'alkyle de formule générale (II), 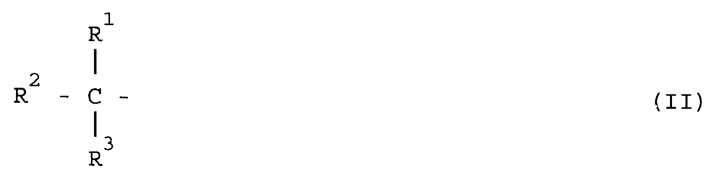 dans laquelle la somme du nombre des atomes de C des radicaux R¹, R² et R³ se situe dans la plage de 6 à 18.

5. Procédé selon une des revendications 1 à 4, caractérisé en ce que les acides hydroxamiques de la formule générale (I) sont contenus dans une concentration de 0,1 à 2,0 mol/l de solutions organiques, de préférence dans une concentration de 0,3 à 1,0 mol/l de solution organique.

6. Procédé selon les revendications 1 à 5, caractérisé en ce que dans les solutions organiques sont contenus en plus des agents modifiants connus en soi, de préférence des alcools ramifiés à longue chaîne, des phénols et/ou leurs esters.

7. Procédé selon la revendication 6, caractérisé en ce que les agents modifiants sont contenus en une concentration de 0,01 à 2,0 mol/l de phase organique, de préférence en une concentration de 0,1 à 1 mol/l de phase organique.

8. Procédé selon une des revendication 1 à 7, caractérisé en ce qu'on mélange ensemble la solution aqueuse de métal de valeur et les solutions organiques de ou des acide(s) hydroxamique(s), éventuellement avec agent modifiant, pendant une période de 1 à 60 minutes, de préférence pendant une période de 5 à 20 minutes.

9. Procédé selon une des revendications 1 à 8, caractérisé en ce qu'on mélange ensemble la solution aqueuse de métaux de valeur et les solutions organiques de ou des acide(s) hydroxamique(s), éventuellement avec un agent modifiant, à une température de 20 à 70°C, de préférence à une température de 30 à 60°C.

10. Procédé selon une des revendications 1 à 9, caractérisé en ce que la solution aqueuse de métaux de valeur comporte en a) une valeur de pH en dessous de zéro.

11. Procédé selon une des revendications 1 à 10, caractérisé en ce qu'on met en oeuvre comme acides complexants de l'acide oxalique, des acides phosphoniques et/ou de l'acide chlorhydrique, de préférence de l'acide chlorhydrique.

12. Procédé selon la revendication 11, caractérisé en ce qu'on met en oeuvre de l'acide chlorhydrique en une concentration de 5 à 10 mol/l de phase aqueuse, de préférence en une concentration de 6 à 8 mol/l de phase aqueuse.

13. Procédé selon une des revendications 11 à 12, caractérisé en ce qu'on réextrait la phase aqueuse contenant l'acide chlorhydrique aqueux et la phase organique contenant de l'antimoine, du bismuth ou du fer pendant un temps de 30 secondes à 10 minutes, de préférence de 1 à 3 minutes.

14. Procédé selon une des revendications 11 à 13, caractérisé en ce que l'extraction d'antimoine, de bismuth et de fer est réalisée à des températures dans la plage de 20 à 60°C, de préférence jusqu'à 30°C.

15. Procédé selon une des revendications 11 à 14, caractérisé en ce qu'on met en oeuvre pour l'extraction la solution aqueuse contenant l'acide chlorhydrique et la solution organique contenant de l'antimoine, du bismuth et du fer dans un rapport volumique de 1:10 à 10:1, de préférence de 1,5:1 à 1:1,5.

16. Procédé selon une des revendications 1 à 10, caractérisé en ce que l'arsenic est extrait avec une solution d'ions de cuivre, en maintenant une valeur de pH entre 1,5 et 2,5.

17. Procédé selon la revendication 16, caractérisé en ce que l'arsenic est extrait avec une solution aqueuse contenant des ions cuivre, qui a de préférence au moins une concentration équimolaire par rapport à la concentration en ions arsenic dans la phase organique, et au maximum une concentration de 40 g/l de cuivre dans la phase aqueuse.

18. Procédé selon une des revendications 16 ou 17, caractérisé en ce qu'on mélange ensemble la solution aqueuse, contenant des ions cuivre et la solution organique contenant des ions arsenic pendant une période de 1 à 60 minutes, de préférence de 5 à 30 minutes.

19. Procédé selon une des revendications 16 à 18, caractérisé en ce qu'on mélange ensemble la solution aqueuse contenant des ions cuivre et la solution organique contenant de l'arsenic à une température de 25 à 70°C, de préférence de 40 à 60°C.

20. Procédé selon une des revendications 16 à 19, caractérisé en ce qu'on mélange ensemble la solution aqueuse, contenant des ions cuivre et la solution organique contenant de l'arsenic dans un rapport volumique de 1,5:1 à 1:1,5 de préférence de 1:1.

21. Procédé selon la revendication 1, caractérisé en ce qu'on mélange après l'extraction d'arsenic la phase organique chargée d'ions de métaux de valeur avec les solutions aqueuses de métaux de valeur contenant les éléments perturbateurs arsenic et éventuellement antimoine, fer ou bismuth, riches en acides minéraux et avec cela on réextrait le métal de valeur, de sorte que les solutions organiques d'acides hydroxamiques peuvent être remises en jeu.
